# EUROPÄISCHE PATENTANMELDUNG

(11) **EP 3 067 096 A1**
(43) Veröffentlichungstag der Anmeldung: **14.09.2016**
(21) Anmeldenummer: 16020080.4
(22) Anmeldetag: 10.03.2016
(51) Int. Cl.: A62C 3/16, H02G 3/04

(54) **AUSKLEIDUNG UND KABELKANAL**

(30) Priorität: 13.03.2015 DE 202015001947 U; 22.04.2015 DE 202015002895 U
(71) Anmelder: h.k.o. Isolier- und Textiltechnik GmbH, 46049 Oberhausen (DE)
(72) Erfinder: SCHRODEN, Thomas, 46049 Oberhausen (DE); KÜHNE, Nicole, 46049 Oberhausen (DE); HALINK, Bert, 46049 Oberhausen (DE); BROCKS, Jürgen, 46049 Oberhausen (DE)
(74) Vertreter: Von Rohr Patentanwälte Partnerschaft mbB

(57) **Zusammenfassung**

Es werden eine Auskleidung (1) für einen Kabelkanal (10) mit länglichen Dämmelementen (2), die abschnittsweise miteinander verbunden sind, sowie ein damit ausgerüsteter Kabelkanal (10) vorgeschlagen.

## Beschreibung

Die vorliegende Erfindung betrifft eine Auskleidung für einen Kabelkanal gemäß dem Oberbegriff des Anspruchs 1 sowie einen Kabelkanal für ein Kabel gemäß dem Oberbegriff des Anspruchs 11 und eine Verwendung der Auskleidung für einen Kabelkanal.

Kabel bzw. Leitungen dienen insbesondere der Übertragung von Energie und/oder Informationen. Bei einem Brand in einem Bauwerk kann es passieren, dass im Bauwerk verlegte Kabel bzw. Leitungen durch den Wärmeeintrag beschädigt werden und die Funktion der Kabel bzw. Leitungen beeinträchtigt wird. Vor diesem Hintergrund ist es üblich, Kabel bzw. Leitungen durch Schutzvorrichtungen, wie Kabelkanäle, gegen - insbesondere mechanische und/oder thermische - Einwirkungen von außen zu schützen.

Die DE 89 00 272 U1 offenbart einen Brandschutzkanal für die Verlegung von elektrischen Kabeln bzw. Leitungen, wobei der Brandschutzkanal zwei zueinander beabstandete Blechprofile aufweist, die über nicht brennbare wärmeisolierende Feuerschutzleisten miteinander verbunden sind. Eine derartige Konstruktionsweise ist jedoch nachteilig, da Blechprofile in der Regel eine hohe Wärmeleitfähigkeit aufweisen und somit auch ein lokaler bzw. punktueller Wärmeeintrag Beschädigungen an anderen Stellen hervorrufen kann. Darüber hinaus ist eine derartige Konstruktionsweise aufwendig und die Montage des Brandschutzkanals kosten- und zeitintensiv.

Die EP 1 187 280 A2 offenbart eine Brandschutzverkleidung für eine Kabelführungseinrichtung mit einem Unterteil und einem Deckelteil, die über vorhandene Kabelführungseinrichtungen montiert werden können. Die Montage einer derartigen Brandschutzverkleidung ist jedoch aufwendig und mit hohen Kosten verbunden. Darüber hinaus ist der Platzbedarf einer derartigen Verkleidung hoch, so dass die Brandschutzverkleidung nicht oder nicht ohne bauliche Maßnahmen bei allen baulichen Gegebenheiten verwendet werden kann.

Die DE 10 2007 050 639 A1 offenbart eine alternative Brandschutzverkleidung, insbesondere für Leitungselemente, wie Kabel, Rohre oder Leitungen, wobei ein formstabiler Träger vorgesehen ist, dessen den Leitungselementen zugewandte Innenseite mit einem aufschäumbaren Dämmschichtbildner beschichtet ist. Unter dem Einfluss höherer Temperaturen schäumt der Dämmschichtbildner auf und bildet eine unbrennbare und isolierende Schutzschicht. Der notwendige Platzbedarf einer derartigen Verkleidung ist jedoch hoch, insbesondere da sich die Brandschutzverkleidung durch den im Brandfall aufgeschäumten Dämmschichtbildner weiter ausdehnt. In Abhängigkeit von den baulichen Gegebenheiten kann es passieren, dass die gebildete Schutzschicht durch Aufschäumen der Dämmschichtbildner nicht dick genug ist und somit nicht die gewünschte Isolierwirkung erzielt werden kann.

Der vorliegenden Erfindung liegt die Aufgabe zugrunde, eine - insbesondere wärmeisolierende - Auskleidung für einen Kabelkanal und einen Kabelkanal mit einer Auskleidung zur Wärmeisolierung anzugeben, vorzugsweise wobei die in dem Kabelkanal geführten Kabel bzw. Leitungen zuverlässig gegen - insbesondere mechanische und/oder thermische - Einwirkungen von außen geschützt werden, ein vorhandener Kabelkanal auch ohne bauliche Maßnahmen nachgerüstet werden kann und/oder eine einfache, schnelle, sichere und/oder kostengünstige Montage bzw. Auskleidung eines Kabelkanals mit der Auskleidung ermöglicht oder unterstützt wird.

Die obige Aufgabe wird durch eine Auskleidung für einen Kabelkanal gemäß Anspruch 1, durch einen Kabelkanal für ein Kabel gemäß Anspruch 11 oder durch eine Verwendung gemäß Anspruch 12 gelöst. Vorteilhafte Weiterbildungen sind Gegenstand der Unteransprüche.

Die erfindungsgemäße Auskleidung bzw. deren Verwendung für einen Kabelkanal bzw. die erfindungsgemäße Kabelkanalauskleidung ist insbesondere zur Wärmeisolierung, vorzugsweise für den Hitze- und/oder Brandschutz, eines Kabels, insbesondere Lichtwellenleiters, in dem Kabelkanal ausgebildet.

Ein Aspekt der vorliegenden Erfindung liegt darin, dass die Auskleidung für den Kabelkanal mindestens zwei, vorzugsweise drei oder vier, längliche und/oder streifenförmige Wärmeisolier- bzw. Dämmelemente aufweist, die zumindest abschnittsweise seitlich - form-, kraft- und/oder stoffschlüssig und/oder zumindest im Wesentlichen starr oder beweglich - miteinander verbunden sind oder eine Baueinheit bilden.

Vorzugsweise bilden die miteinander verbundenen Dämmelemente der Auskleidung ein Basisteil, insbesondere wobei das Basisteil als eine - vorzugsweise zumindest im Wesentlichen U-förmige - Baueinheit in den Kabelkanal einsetzbar bzw. klemmbar ist. Auf diese Weise wird eine einfache, schnelle, sichere und/oder kostengünstige Montage bzw. Auskleidung des Kabelkanals ermöglicht oder unterstützt.

Unter dem Begriff "Kabelkanal" ist bei der vorliegenden Erfindung vorzugsweise eine konstruktive Einrichtung zu verstehen, die insbesondere dazu ausgebildet ist, Kabel bzw. Leitungen - innerhalb und/oder außerhalb von Bauwerken - zu führen, zu tragen, von der Umgebung räumlich zu trennen und/oder vor thermischen bzw. mechanischen Einwirkungen von außen zu schützen. Ein Kabelkanal kann vorzugsweise auf bzw. an oder in bzw. hinter einer Wand bzw. einem Mauerwerk befestigt oder verlegt sein. Insbesondere kann ein Kabelkanal im Sinne der vorliegenden Erfindung als Unterputz- oder Aufputzkanal ausgebildet sein. Vorzugsweise weist ein Kabelkanal im Sinne der vorliegenden Erfindung eine Wandung bzw. Kabelkanalwandung auf und/oder ist der Kabelkanal durch eine Wandung bzw. Kabelkanalwandung gebildet bzw. - insbesondere seitlich - begrenzt.

Unter dem Begriff "Dämmelement" ist bei der vorliegenden Erfindung vorzugsweise eine konstruktive Einrichtung zu verstehen, die insbesondere zur Wärmedämmung bzw. -isolierung ausgebildet ist und/oder eine niedrige Wärmeleitfähigkeit aufweist. Vorzugsweise weist ein Dämmelement Dämmmaterial, insbesondere Mineralfasern bzw. Mineralwolle, wie Steinwolle und/oder Glaswolle, auf oder ist durch dieses bzw. diese gebildet.

Vorzugsweise weisen die erfindungsgemäßen Dämmelemente jeweils mindestens einen Kern mit Dämmmaterial und jeweils einen den Kern - zumindest radial bzw. seitlich - ummantelnden Mantel auf. Auf diese Weise wird eine besonders einfache und/oder sichere Montage bzw. Auskleidung des Kabelkanals gewährleistet, vorzugsweise ohne dass ein direkter Kontakt mit dem Dämmmaterial erforderlich ist.

Ein weiterer, auch unabhängig realisierbarer Aspekt der vorliegenden Erfindung liegt darin, dass die Auskleidung bzw. die Dämmelemente der Auskleidung flexibel, elastisch und/oder - insbesondere radial bzw. seitlich - zusammendrückbar ist bzw. sind. In vorteilhafter Weise ermöglicht dies, die Auskleidung in den Kabelkanal zu klemmen bzw. an den Kabelkanal bzw. die Kabelkanalwandung anzupassen.

Besonders bevorzugt ist die Auskleidung derart zusammendrückbar, dass diese kraftschlüssig, schraubenlos und/oder klebemittelfrei in und/oder mit dem Kabelkanal bzw. der Kabelkanalwandung befestigbar ist. Auf diese Weise wird eine besonders einfache, schnelle und/oder kostengünstige Installation bzw. Auskleidung des Kabelkanals ermöglicht oder unterstützt.

Gemäß einem weiteren, auch unabhängig realisierbaren Aspekt der vorliegenden Erfindung weist die Auskleidung ein Basisteil mit einem ersten Dämmelement bzw. einem Bodenelement, einem zweiten Dämmelement bzw. einem ersten Seitenelement und einem dritten Dämmelement bzw. einem zweiten Seitenelement auf, vorzugsweise wobei das Bodenelement zumindest abschnittsweise seitlich mit den Seitenelementen verbunden ist und/oder die Seitenelemente relativ zum Bodenelement verschwenkbar sind, insbesondere derart, dass das Basisteil einen - vorzugsweise U-förmigen - Brandschutzkanal im Kabelkanal bildet und/oder in den Kabelkanal einsetzbar oder einklemmbar ist. Auf diese Weise können entsprechende Vorteile realisiert werden.

Vorzugsweise sind die Seitenelemente jeweils mittels - vorzugsweise flexibler - Verbindungselemente mit dem Bodenelement verbunden, vorzugsweise wobei die Verbindungselemente kleiner bzw. schmaler als die Dicke bzw. Höhe des Bodenelements und/oder der Seitenelemente sind. Auf diese Weise sind die Seitenelemente unter Spannung und/oder Verformung, insbesondere Zusammendrücken, des Bodenelements und/oder der Seitenelemente relativ zum Bodenelement verschwenkbar. In vorteilhafter Weise werden so etwaige Fugen bzw. Zwischenräume zwischen den Seitenelementen und dem Bodenelement minimiert und/oder die Dämmwirkung der Auskleidung im Kabelkanal maximiert.

Ein weiterer, auch unabhängig realisierbarer Aspekt der vorliegenden Erfindung liegt darin, dass eine erste Seite des Mantels zwischen den Kernen mit einer der ersten Seite gegenüberliegenden zweiten Seite des Mantels form- und/oder stoffschlüssig, insbesondere durch Vernähen, verbunden ist. Insbesondere weist die Auskleidung bzw. das Basisteil außen eine geschlossene und/oder ununterbrochene Oberfläche auf. Dies ist einer effizienten Dämmwirkung dienlich.

Der erfindungsgemäße Kabelkanal für ein Kabel, insbesondere einen Lichtwellenleiter, weist mindestens eine erfindungsgemäße Auskleidung, vorzugsweise mehrere erfindungsgemäße Auskleidungen, zur Wärmeisolierung, insbesondere für den Hitze- und/oder Brandschutz, des Kabels auf. Auf diese Weise werden entsprechende Vorteile realisiert.

Zusätzliche Vorteile, Merkmale, Eigenschaften und Aspekte der vorliegenden Erfindung ergeben sich aus den Ansprüchen und der folgenden Beschreibung bevorzugter Ausführungsformen anhand der Zeichnung. Es zeigt:
- Fig. 1: einen schematischen Querschnitt eines vorschlagsgemäßen Kabelkanals mit einer vorschlagsgemäßen Auskleidung gemäß einer ersten Ausführungsform;
- Fig. 2: einen schematischen Querschnitt einer vorschlagsgemäßen Auskleidung gemäß einer zweiten Ausführungsform;
- Fig. 3: einen schematischen Querschnitt der Auskleidung gemäß Fig. 1 in nicht eingebautem Zustand;
- Fig. 4: einen schematischen Querschnitt eines Basisteils einer vorschlagsgemäßen Auskleidung gemäß einer dritten Ausführungsform; und
- Fig. 5: einen schematischen Längsschnitt zweier vorschlagsgemäßer Auskleidungen.

In den teilweise nicht maßstabsgerechten, nur schematischen Figuren werden für die gleichen oder ähnlichen Teile dieselben Bezugszeichen verwendet, wobei entsprechende oder vergleichbare Eigenschaften und Vorteile erreicht werden, auch wenn eine wiederholte Beschreibung weggelassen ist.

Die erfindungsgemäße Auskleidung 1 weist vorzugsweise mindestens zwei, insbesondere drei oder vier, Dämmelemente 2 auf, vorzugsweise wobei mindestens zwei, insbesondere drei oder vier, Dämmelemente 2 der Auskleidung 1 zumindest abschnittsweise seitlich - insbesondere fest bzw. unlösbar und/oder starr oder beweglich - miteinander verbunden sind.

Die Dämmelemente 2 der Auskleidung 1 sind vorzugsweise länglich, streifenförmig, plattenförmig und/oder zumindest im Wesentlichen flach ausgebildet. Besonders bevorzugt verlaufen die Längsachsen bzw. die Haupterstreckungsachsen der Dämmelemente 2 zumindest im Wesentlichen parallel zueinander.

Vorzugsweise bilden die miteinander verbundenen Dämmelemente 2 der Auskleidung 1 ein Basisteil 3 der Auskleidung 1 und/oder weist die Auskleidung 1 ein Basisteil 3 mit mindestens zwei, vorzugsweise drei oder vier, miteinander verbundenen Dämmelementen 2 auf.

Das Basisteil 3 weist vorzugsweise ein erstes Dämmelement bzw. Bodenelement 4, ein zweites Dämmelement bzw. erstes Seitenelement 5 und ein drittes Dämmelement bzw. zweites Seitenelement 6 auf.

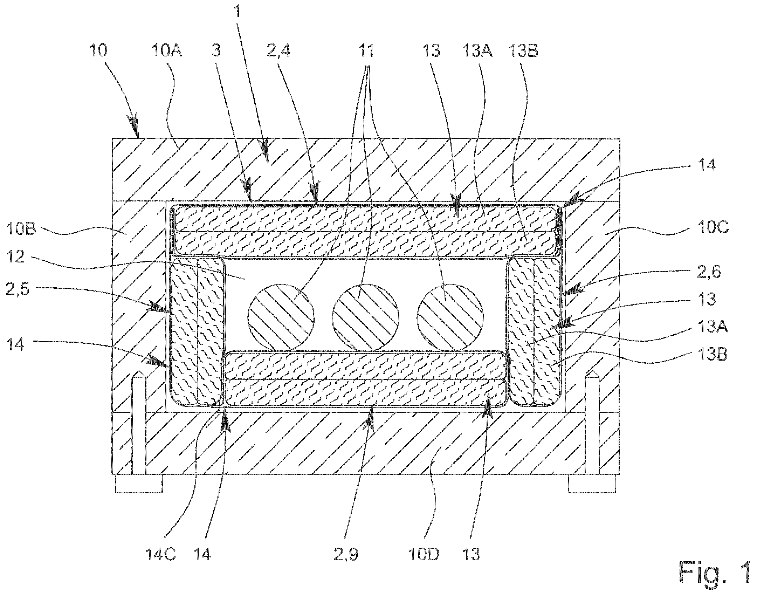

Bei der in Fig. 1 dargestellten Ausführungsform weist das Basisteil 3 drei Dämmelemente 2 auf. Es sind jedoch auch konstruktive Lösungen möglich, bei denen das Basisteil 3 zwei oder vier Dämmelemente 2 aufweist.

Das erste Dämmelement bzw. Bodenelement 4, das zweite Dämmelement bzw. erste Seitenelement 5 und das dritte Dämmelement bzw. zweite Seitenelement 6 sind vorzugsweise zumindest im Wesentlichen baugleich und/oder weisen zumindest im Wesentlichen den gleichen Aufbau auf. Der vorschlagsgemäße Aufbau der Dämmelemente 2 wird im weiteren Verlauf der Beschreibung noch näher erläutert.

Das Bodenelement 4 ist vorzugsweise zwischen den Seitenelementen 5 und 6 angeordnet. Vorzugsweise ist das Bodenelement 4 zumindest abschnittsweise seitlich und/oder zumindest im Wesentlichen starr oder beweglich mit dem ersten Seitenelement 5 und dem zweiten Seitenelement 6 verbunden.

Besonders bevorzugt weist das Basisteil 3 ein erstes Verbindungselement 7 und/oder ein zweites Verbindungselement 8 auf, vorzugsweise wobei das erste Verbindungselement 7 das Bodenelement 4 mit dem ersten Seitenelement 5 und/oder das zweite Verbindungselement 8 das Bodenelement 4 mit dem zweiten Seitenelement 6 verbindet.

Die Auskleidung 1 weist vorzugsweise ein viertes Dämmelement bzw. ein Abdeckelement 9 auf, vorzugsweise wobei das Abdeckelement 9 zum Verschließen des Basisteils 3 ausgebildet ist.

Besonders bevorzugt ist das Abdeckelement 9 als separates Bauteil der Auskleidung 1 ausgebildet und/oder von dem Basisteil 3 trennbar bzw. abnehmbar. Es sind jedoch auch konstruktive Lösungen möglich, bei denen das Abdeckelement 9 zumindest abschnittsweise mit dem Basisteil 3, insbesondere entweder mit dem ersten Seitenelement 5 oder dem zweiten Seitenelement 6, verbunden ist.

Die Auskleidung 1 ist vorzugsweise dazu ausgebildet, einen Kabelkanal 10 bzw. die Wandung eines Kabelkanals 10 innen auszukleiden, wie insbesondere Fig. 1 veranschaulicht. Besonders bevorzugt ist die Auskleidung 1, insbesondere das Basisteil 3, in einen Kabelkanal 10 einlegbar, einschiebbar, einsetzbar und/oder einklemmbar.

Vorzugsweise ist die Auskleidung 1 kraftschlüssig, schraubenlos, klebemittelfrei und/oder klemmend in oder mit dem Kabelkanal 10 bzw. der Kabelkanalwandung befestigbar.

Besonders bevorzugt ist die Auskleidung 1 derart flexibel, elastisch und/oder - insbesondere radial bzw. seitlich - zusammendrückbar, dass die Auskleidung 1 im eingebauten Zustand kraftschlüssig vom Kabelkanal 10 bzw. der Kabelkanalwandung gehalten wird.

Der Kabelkanal 10 bzw. die Kabelkanalwandung ist vorzugsweise dazu ausgebildet, ein oder mehrere Kabel 11 zu führen, zu tragen, von der Umgebung zu trennen und/oder vor Einwirkungen aus der Umgebung zu schützen.

Bei der in Fig. 1 dargestellten Ausführungsform weist der Kabelkanal 10 bzw. die Kabelkanalwandung einen zumindest im Wesentlichen rechteckigen oder quadratischen Querschnitt auf. Es sind jedoch auch andere konstruktive Lösungen möglich, insbesondere bei denen der Querschnitt des Kabelkanals 10 bzw. der Kabelkanalwandung zumindest im Wesentlichen kreisförmig oder oval ausgebildet ist.

Vorzugsweise ist der Kabelkanal 10 bzw. die Kabelkanalwandung radial bzw. seitlich zumindest im Wesentlichen geschlossen. Hier sind jedoch auch andere konstruktive Lösungen möglich. Insbesondere kann der Kabelkanal 10 bzw. die Kabelkanalwandung radial bzw. seitlich auch Öffnungen aufweisen und/oder als Rinne bzw. Wanne ausgebildet sein.

Der Kabelkanal 10 bzw. die Kabelkanalwandung weist vorzugsweise eine Bodenplatte 10A, eine erste Seitenplatte 10B, eine zweite Seitenplatte 10C und eine Abdeckplatte 10D auf und/oder ist durch eine Bodenplatte 10A, eine erste Seitenplatte 10B, eine zweite Seitenplatte 10C und eine Abdeckplatte 10D gebildet. Vorzugsweise sind/ist die Bodenplatte 10A, die erste Seitenplatte 10B, die zweite Seitenplatte 10C und/oder die Abdeckplatte 10D hochtemperaturbeständig, feuerfest und/oder feuerhemmend, insbesondere zementgebunden, ausgebildet.

Vorzugsweise sind/ist die Bodenplatte 10A, die erste Seitenplatte 10B, die zweite Seitenplatte 10C und/oder die Abdeckplatte 10D form-, kraft- und/oder stoffschlüssig miteinander verbunden oder verbindbar. Es sind insbesondere auch konstruktive Lösungen möglich, bei denen die Bodenplatte 10A, die erste Seitenplatte 10B, die zweite Seitenplatte 10C und/oder die Abdeckplatte 10D einstückig ausgebildet sind oder eine Baueinheit bilden.

Vorzugsweise ist die Deckplatte 10D abnehmbar bzw. ist der Kabelkanal 10 bzw. die Kabelkanalwandung durch Abnehmen der Deckplatte 10D - insbesondere zur Montage oder Wartung - öffenbar.

Die Auskleidung 1 ist vorzugsweise dazu ausgebildet, einen Brandschutzkanal 12 innerhalb des Kabelkanals 10 zu bilden. Vorzugsweise sind ein oder mehrere Kabel 11, insbesondere Lichtwellenleiter, in den durch die Auskleidung 1 gebildeten Brandschutzkanal 12 einlegbar.

Vorzugsweise weist die Auskleidung 1 bzw. der durch die Auskleidung 1 gebildete Brandschutzkanal 12 im Kabelkanal 10 bzw. im eingebauten Zustand einen zumindest im Wesentlichen rechteckigen oder quadratischen Querschnitt auf. Es sind jedoch auch andere konstruktive Lösungen möglich, insbesondere bei denen der Querschnitt der Auskleidung 1 bzw. des durch die Auskleidung 1 gebildeten Brandschutzkanals 12 im Kabelkanal 10 bzw. im eingebauten Zustand kreisförmig oder oval ausgebildet ist.

Vorzugsweise ist das Bodenelement 4 bzw. die Haupterstreckungsebene des Bodenelements zumindest im Wesentlichen parallel zum Abdeckelement 9 bzw. zu der Haupterstreckungsebene des Abdeckelements 9 und/oder beabstandet zum Abdeckelement 9 angeordnet oder anordenbar.

Vorzugsweise sind die Seitenelemente 5 und 6 bzw. Haupterstreckungsebenen der Seitenelemente 5 und 6 zumindest im Wesentlichen parallel und/oder beabstandet zueinander angeordnet oder anordenbar, zumindest im Kabelkanal 10 bzw. im eingebauten Zustand.

Vorzugsweise sind die Seitenelemente 5 und 6 bzw. die Haupterstreckungsebenen der Seitenelemente 5 und 6 im Kabelkanal 10 bzw. im eingebauten Zustand zumindest im Wesentlichen orthogonal zum Bodenelement 4 bzw. zur Haupterstreckungsebene des Bodenelements 4 und/oder zum Abdeckelement 9 bzw. zur Haupterstreckungsebene des Abdeckelements 9 angeordnet oder anordenbar.

Der Kabelkanal 10 ist vorzugsweise an einer zugeordneten Wand (nicht dargestellt) befestigbar. Insbesondere ist der Kabelkanal 10 als Aufputzkanal ausgebildet. Hier sind jedoch auch andere konstruktive Lösungen möglich.

Bei der in Fig. 1 dargestellten Ausführungsform ist der Kabelkanal 10 vorzugsweise an einer nicht dargestellten Decke befestigt oder befestigbar, vorzugsweise wobei der Kabelkanal 10 von unten öffenbar ist. Insbesondere ist die Auskleidung 1 dazu ausgebildet, über Kopf und/oder von unten in den an einer Decke (nicht dargestellt) befestigten Kabelkanal 10 eingeklemmt zu werden.

Bei der in Fig. 1 dargestellten ersten Ausführungsform der Auskleidung 1 erstreckt sich das Bodenelement 4 der Auskleidung 1 vorzugsweise zumindest im Wesentlichen über die gesamte Breite des Kabelkanals 10 bzw. von der ersten Seitenplatte 10B bis zur zweiten Seitenplatte 10C. Insbesondere liegt das Bodenelement 4 im eingebauten Zustand mit drei Seiten am Kabelkanal 10 bzw. der Kabelkanalwandung und/oder seitlich an der ersten Seitenplatte 10B und an der zweiten Seitenplatte 10C an.

Bei der ersten Ausführungsform erstrecken/erstreckt sich das erste Seitenelement 5 und/oder das zweite Seitenelement 6 vorzugsweise nur partiell über die Höhe des Kabelkanals 10. Insbesondere erstrecken/erstreckt sich das erste Seitenelement 5 und/oder das zweite Seitenelement 6 vom Bodenelement 4 bis zur Abdeckplatte 10D und/oder liegen/liegt das erste Seitenelement 5 und/oder das zweite Seitenelement 6 im eingebauten Zustand mit zwei Seiten am Kabelkanal 10 bzw. der Kabelkanalwandung und/oder seitlich an dem Bodenelement 4 und der Abdeckplatte 10D an.

Vorzugsweise ist das erste Seitenelement 5 und das zweite Seitenelement 6 zumindest im Wesentlichen gleich breit bzw. weisen das erste Seitenelement 5 und das zweite Seitenelement 6 zumindest im Wesentlichen die gleiche Breite auf. Hier sind jedoch auch andere Lösungen möglich.

Das Abdeckelement 9 erstreckt sich bei der ersten Ausführungsform vorzugsweise nur partiell über die Breite des Kabelkanals 10. Insbesondere liegt das Abdeckelement 9 im eingebauten Zustand mit einer Seite am Kabelkanal 10 bzw. der Kabelkanalwandung und/oder seitlich am ersten Seitenelement 5 und am zweiten Seitenelement 6 an und/oder ist das Abdeckelement 9 zwischen diesen angeordnet, insbesondere eingeklemmt. Besonders bevorzugt ist das Abdeckelement 9 schmaler als das Bodenelement 4, wie insbesondere Fig. 1 veranschaulicht.

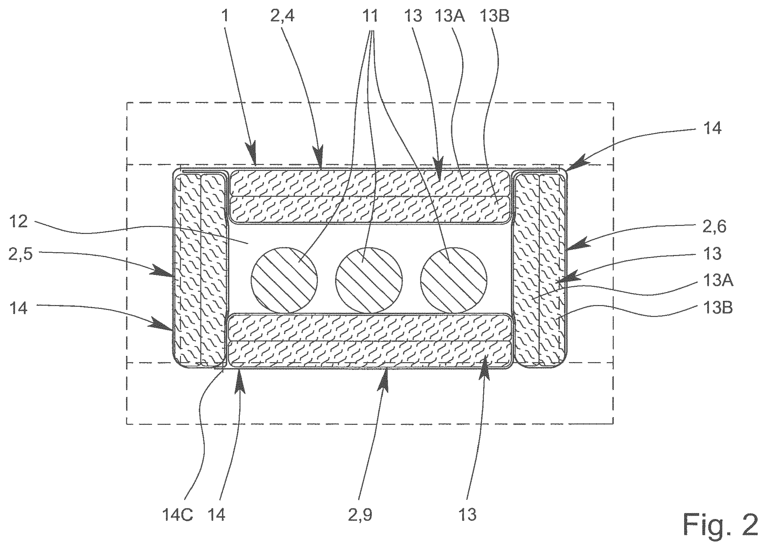

Bei der in Fig. 2 dargestellten zweiten Ausführungsform weisen das Bodenelement 4 und das Abdeckelement 9 zumindest im Wesentlichen die gleiche Breite auf. Vorzugsweise erstreckt sich das Bodenelement 4 - im Gegensatz zur ersten Ausführungsform - partiell über die Breite des Kabelkanals 10. Insbesondere erstreckt sich das Bodenelement 4 vom ersten Seitenelement 5 bis zum zweiten Seitenelement 6 bzw. ist das Bodenelement 4 zwischen diesen angeordnet.

Bei der zweiten Ausführungsform erstrecken/erstreckt sich das erste Seitenelement 5 und/oder das zweite Seitenelement 6 vorzugsweise über die gesamte Höhe des Kabelkanals 10. Insbesondere erstrecken/erstreckt sich das erste Seitenelement 5 und/oder das zweite Seitenelement 6 von der Bodenplatte 10A bis zur Abdeckplatte 10D und/oder liegen/liegt das erste Seitenelement 5 und/oder das zweite Seitenelement 6 im eingebauten Zustand mit drei Seiten am Kabelkanal 10 bzw. der Kabelkanalwandung und/oder seitlich am Kabelkanal 10, insbesondere sowohl an der Bodenplatte 10A als auch an der Abdeckplatte 10D, an.

Die Auskleidung 1 ist vorzugsweise zumindest im Wesentlichen größer, insbesondere breiter und/oder höher, als der Kabelkanal 10 bzw. die Breite und/oder Höhe des Kabelkanals 10, wie in Fig. 2 durch Strichlinien angedeutet.

Die Auskleidung 1 bzw. die Dämmelemente 2, insbesondere das Bodenelement 4, das erste Seitenelement 5, das zweite Seitenelement 6 und/oder das Abdeckelement 9, ist bzw. sind vorzugsweise durch Verformen, insbesondere durch Zusammendrücken, in den Kabelkanal 10 einsetzbar oder einklemmbar. Besonders bevorzugt ist die Auskleidung 1 bzw. sind die Dämmelemente 2, insbesondere das Bodenelement 4, das erste Seitenelement 5, das zweite Seitenelement 6 und/oder das Abdeckelement 9, flexibel, elastisch und/oder verformbar ausgebildet, vorzugsweise derart, dass die Außenkontur der Auskleidung 1 an den Kabelkanal 10 bzw. die Geometrie des Kabelkanals 10 anpassbar ist.

Die Auskleidung 1 bzw. die Dämmelemente 2, insbesondere das Bodenelement 4, das erste Seitenelement 5, das zweite Seitenelement 6 und/oder das Abdeckelement 9, ist bzw. sind vorzugsweise dazu ausgebildet, - zumindest im eingebauten Zustand - außen zumindest im Wesentlichen vollflächig - insbesondere auch im Eckbereich des Kabelkanals 10 bzw. der Wandung des Kabelkanals 10 - am Kabelkanal 10 bzw. der Wandung des Kabelkanals 10 anzuliegen.

Im Folgenden soll der Aufbau der Dämmelemente 2 näher erläutert werden.

Die Dämmelemente 2, insbesondere das Bodenelement 4, das erste Seitenelement 5, das zweite Seitenelement 6 und/oder das Abdeckelement 9, weisen jeweils mindestens einen - vorzugsweise länglichen und/oder streifenförmigen - Kern 13 mit Dämmmaterial auf.

Bei den dargestellten Ausführungsformen ist der Kern 13 vorzugsweise zweiteilig ausgebildet. Es ist jedoch auch möglich, dass der Kern 13 einteilig ausgebildet ist.

Vorzugsweise weist der Kern 13 eine erste, insbesondere mattenförmige, Schicht 13A und eine zweite, insbesondere mattenförmige, Schicht 13B auf.

Vorzugsweise ist bzw. sind der Kern 13, insbesondere die erste Schicht 13A und/oder die zweite Schicht 13B, als Fasermatte, Nadelmatte, Nähgewirkmatte oder Vliesmatte ausgebildet.

Vorzugsweise sind die erste Schicht 13A und die zweite Schicht 13B miteinander vernadelt. Hier sind jedoch auch andere konstruktive Lösungen möglich.

Besonders bevorzugt ist bzw. sind der Kern 13, insbesondere die erste Schicht 13A und/oder die zweite Schicht 13B, wärmeisolierend, hochtemperaturbeständig, feuerfest und/oder feuerhemmend ausgebildet.

Der Kern 13 bzw. das Dämmmaterial, insbesondere die erste Schicht 13A und/oder die zweite Schicht 13B, ist bzw. sind vorzugsweise aus Fasern bzw. Mineralwolle, insbesondere Glaswolle und/oder Steinwolle, hergestellt und/oder besteht bzw. bestehen vorzugsweise zumindest im Wesentlichen aus Fasern bzw. Mineralwolle, insbesondere Glaswolle und/oder Steinwolle,.

Die Fasern sind vorzugsweise anorganische Fasern bzw. Mineralfasern, wie Steinfasern oder Glasfasern. Insbesondere sind die Fasern Silikatfasern, Kalziumsilikatfasern, Kalziummagnesiumsilikatfasern (CMS-Fasern), A-, C-, E-, ECR-, S-, S2-, HT- oder R-Glasfasern, Basaltfasern oder eine Mischung davon.

Der Kern 13 bzw. das Dämmmaterial, insbesondere die erste Schicht 13A und/oder die zweite Schicht 13B, weist bzw. weisen vorzugsweise eine Dichte von mindestens 50 kg/m³, besonders bevorzugt mindestens 80 kg/m³, insbesondere mindestens 100 kg/m³, und/oder von höchstens 250 kg/m³, besonders bevorzugt höchstens 170 kg/m³, insbesondere höchstens 150 kg/m³, auf. Ganz besonders bevorzugt weist bzw. weisen der Kern 13 bzw. das Dämmmaterial, insbesondere die erste Schicht 13A und/oder die zweite Schicht 13B, eine Dichte von zumindest im Wesentlichen 130 kg/m³ auf.

Vorzugsweise weisen die Dämmelemente 2, insbesondere das Bodenelement 4, das erste Seitenelement 5, das zweite Seitenelement 6 und/oder das Abdeckelement 9, jeweils einen den Kern 13 ummantelnden Mantel 14 auf.

Besonders bevorzugt weisen die Dämmelemente 2 des Basisteils 3, insbesondere das Bodenelement 4, das erste Seitenelement 5 und das zweite Seitenelement 6, einen gemeinsamen die Kerne 13 des Basisteils 3 ummantelnden Mantel 14 auf.

Der Mantel 14 ist vorzugsweise dazu ausgebildet, den jeweiligen Kern 13 bzw. das Dämmmaterial, insbesondere radial, zu halten und/oder zu komprimieren.

Vorzugsweise ist der Mantel 14 als Gewebe, Gewirke oder Gestricke ausgebildet, insbesondere wobei der Mantel 14 Mineralfasern, vorzugsweise Glasfasern, insbesondere A-, C-, E-, ECR-, S-, S2-, HT- oder R-Glasfasern, Silikatfasern, Kalziumsilikatfasern, Kalziummagnesiumsilikatfasern (CMS-Fasern), Basaltfasern oder eine Mischung dieser aufweist oder durch diese oder einer Mischung dieser gebildet ist.

Der Mantel 14 weist vorzugsweise eine flächenbezogene Masse bzw. Massenbelegung von mindestens 10 g/m², besonders bevorzugt mindestens 100 g/m², insbesondere mindestens 500 g/m², und/oder höchstens 3500 g/m², besonders bevorzugt höchstens 2500 g/m², insbesondere höchstens 1500 g/m², auf. Ganz besonders bevorzugt weist der Mantel 14 eine flächenbezogene Masse bzw. Massenbelegung von zumindest im Wesentlichen 200 g/m² auf.

Der Mantel 14 weist vorzugsweise eine - insbesondere anorganische - Beschichtung, Kaschierung und/oder Ausrüstung auf, vorzugsweise wobei die Beschichtung, Kaschierung und/oder Ausrüstung dazu ausgebildet sind/ist, die Brandschutzfähigkeit des Mantels 14 in vorteilhafter Weise zu erhöhen.

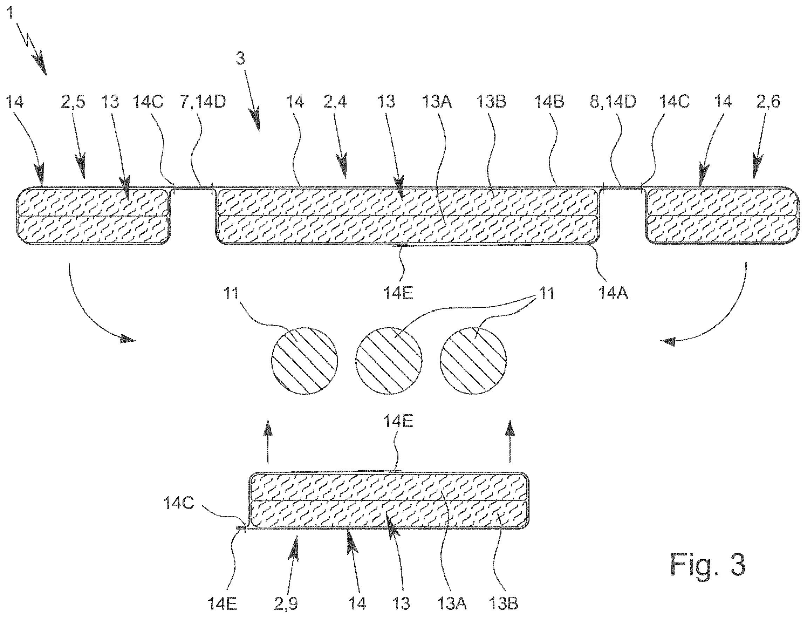

Wie insbesondere Fig. 3 veranschaulicht, weist das Basisteil 3, insbesondere das Bodenelement 4, das erste Seitenelement 5 und das zweite Seitenelement 6, einen gemeinsamen Mantel 14 auf bzw. ummantelt der Mantel 14 des Basisteils 3 den Kern 13 des Bodenelements 4, den Kern 13 des ersten Seitenelements 5 und den Kern 13 des zweiten Seitenelements 6.

Vorzugsweise ist eine erste Seite 14A des Mantels 14 mit einer der ersten Seite 14A gegenüberliegenden zweiten Seite 14B des Mantels 14 zwischen den Kernen 13 form- und/oder stoffschlüssig, insbesondere durch Vernähen, verbunden, vorzugsweise derart, dass der Mantel 14 des Basisteils 3 sich zumindest im Wesentlichen an die Kontur der Kerne 13 anpasst.

Vorzugsweise ist die erste Seite 14A mit der zweiten Seite 14B des Mantels 14 an einer Kante, insbesondere Seitenkante, des jeweiligen Dämmelements 2 vernäht.

Vorzugsweise weist der Mantel 14, insbesondere des Basisteils 3, eine insbesondere unmittelbar an die Seitenkante des jeweiligen Dämmelements 2 angrenzende Naht 14C auf. Insbesondere verbindet die Naht 14C die erste Seite 14A mit der zweiten Seite 14B des Mantels 14 zwischen den Kernen 13.

Vorzugsweise ist die Naht 14C bzw. sind die Nähte 14C des Mantels 14 aus Mineralfasern, insbesondere Glasfasern, gebildet und/oder weisen diese auf. Hier sind jedoch auch andere Lösungen möglich. Insbesondere kann bzw. können die Naht 14C bzw. die Nähte 14C auch Synthesefasern und/oder Aramidfasern aufweisen oder durch diese gebildet sein.

Besonders bevorzugt weist der Mantel 14 zwischen dem Bodenelement 4 und dem ersten Seitenelement 5 und dem Bodenelement 4 und dem zweiten Seitenelement 6 eine erste Nahtverbindung 14D auf.

Vorzugsweise verbindet die erste Nahtverbindung 14D das Bodenelement 4 mit dem ersten Seitenelement 5 und/oder das Bodenelement 4 mit dem zweiten Seitenelement 6.

Bei der in Fig. 3 dargestellten Ausführungsform bildet der Mantel 14, insbesondere die erste Nahtverbindung 14D, das erste Verbindungselement 7 und/oder das zweite Verbindungselement 8 und/oder ist das erste Verbindungselement 7 und/oder das zweite Verbindungselement 8 einstückig mit dem Mantel 14 ausgebildet. Hier sind jedoch auch andere konstruktive Lösungen möglich. Insbesondere können/kann das erste Verbindungselement 7 und/oder das zweite Verbindungselement 8 als separates Element form-, kraft- und/oder stoffschlüssig mit dem Mantel 14 verbunden sein.

Die erste Nahtverbindung 14D bzw. das erste Verbindungselement 7 und/oder das zweite Verbindungselement 8 erstrecken/erstreckt sich vorzugsweise zumindest im Wesentlichen ununterbrochen und/oder über die gesamte Länge des Basisteils 3, insbesondere des Bodenelements 4, des ersten Seitenelements 5 und/oder zweiten Seitenelements 6. Hier sind jedoch auch andere konstruktive Lösungen möglich, insbesondere bei denen sich die erste Nahtverbindung 14D bzw. das erste Verbindungselement 7 und/oder das zweite Verbindungselement 8 nur partiell oder abschnittsweise über die Länge des Basisteils 3 erstrecken/erstreckt. Insbesondere kann das Bodenelement 4 seitlich lediglich abschnittsweise mit dem ersten Seitenelement 5 und/oder mit dem zweiten Seitenelement 6 verbunden sein.

Die erste Nahtverbindung 14D bzw. das erste Verbindungselement 7 und/oder das zweite Verbindungselement 8 sind/ist bei der in Fig. 3 dargestellten Ausführungsform an einer Außenseite bzw. einer der Kabelkanalwandung (in Fig. 3 nicht dargestellt) zugewandten Seite des Basisteils 3 angeordnet. Hier sind jedoch auch andere Lösungen möglich. Insbesondere können/kann das erste Verbindungselement 7 und/oder das zweite Verbindungselement 8 auf einer Innenseite bzw. der Kabelkanalwandung abgewandten Seite des Basisteils 3 angeordnet sein.

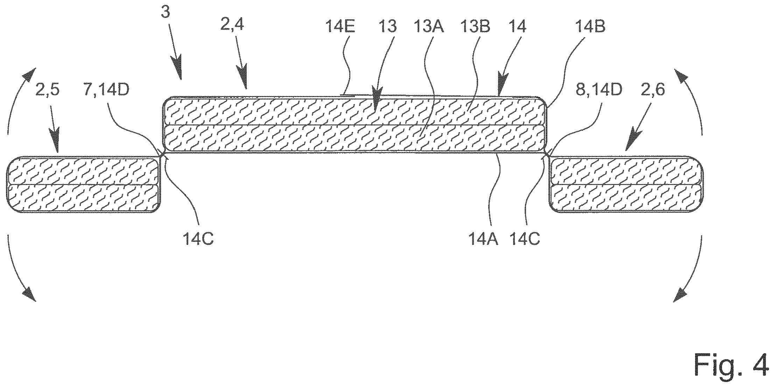

Bei der in Fig. 4 dargestellten dritten Ausführungsform der Auskleidung 1 erstrecken/erstreckt sich das erste Verbindungselement 7 und/oder das zweite Verbindungselement 8 schräg bzw. diagonal zwischen dem Bodenelement 4 und dem ersten Seitenelement 5 bzw. dem Bodenelement 4 und dem zweiten Seitenelement 6. Insbesondere verbindet das erste Verbindungselement 7 bzw. das zweite Verbindungselement 8 die Außenseite des ersten Seitenelements 5 bzw. des zweiten Seitenelements 6 mit der Innenseite des Bodenelements 4.

Die erste Nahtverbindung 14D bzw. das erste Verbindungselement 7 und/oder das zweite Verbindungselement 8 sind/ist vorzugsweise derart flexibel, elastisch und/oder beweglich, dass das erste Seitenelement 5 und/oder zweite Seitenelement 6 relativ zum Bodenelement 4 verschwenkbar sind/ist, wie in Fig. 3 und Fig. 4 durch Pfeile angedeutet.

Besonders bevorzugt sind/ist das erste Seitenelement 5 und/oder zweite Seitenelement 6 relativ zum Bodenelement 4 derart wegklappbar bzw. verschwenkbar, dass das Basisteil 3 ein zumindest im Wesentlichen U-förmiges Profil aufweist oder bildet und/oder als solches in den Kabelkanal 10 eingesetzt bzw. eingeklemmt werden kann. Es sind jedoch auch konstruktive Lösungen möglich, bei denen das erste Verbindungselement 7 und/oder das zweite Verbindungselement 8 zumindest im Wesentlichen starr ausgebildet sind/ist, vorzugsweise wobei das Basisteil 3 u-förmig ausgebildet ist.

Vorzugsweise sind/ist die erste Nahtverbindung 14D bzw. das erste Verbindungselement 7 und/oder das zweite Verbindungselement 8 kleiner bzw. schmaler als die Dicke bzw. Höhe des Bodenelements 4, des ersten Seitenelements 5 und/oder des zweiten Seitenelements 6.

Vorzugsweise sind/ist die erste Nahtverbindung 14D bzw. das erste Verbindungselement 7 und/oder das zweite Verbindungselement 8 derart klein bzw. schmal, dass das erste Seitenelement 5 und/oder das zweite Seitenelement 6 ausschließlich durch Verformen, insbesondere Zusammendrücken, des Bodenelements 4, des ersten Seitenelements 5 und/oder des zweiten Seitenelements 6 verschwenkbar sind/ist. In vorteilhafter Weise ermöglicht dies, dass der Abstand bzw. die Fuge zwischen dem Bodenelement 4 und den Seitenelementen 5 und 6 - zumindest im Gebrauchszustand bzw. im eingeklemmten Zustand - minimiert und/oder das erste Seitenelement 5 bzw. das zweite Seitenelement 6 gegen die Kabelkanalwandung gespannt wird bzw. werden.

Das Abdeckelement 9 ist vorzugsweise breiter als der Kabelkanal 10 und/oder derjenige Abstand, der zwischen dem ersten Seitenelement 5 und dem zweiten Seitenelement 6 im eingebauten Zustand vorliegt. In vorteilhafter Weise wird so ein vollständiges Anliegen und/oder kraftschlüssiges Einklemmen des Abdeckelements 9 und/oder der Seitenelemente 5 und 6 im Kabelkanal 10 gewährleistet und ein Herausfallen des Abdeckelements 9 - auch bei geöffnetem und an einer Decke (nicht dargestellt) befestigtem Kabelkanal 10 - verhindert.

Vorzugsweise weist der Mantel 14 mindestens eine (zweite) Nahtverbindung 14E zum Verschließen des Mantels 14 auf, insbesondere wobei die (zweite) Nahtverbindung 14E auf einer inneren Flachseite der Auskleidung 1 und/oder einer der Kabelkanalwandung abgewandten Seite der Auskleidung 1 ausgebildet ist. Alternativ oder zusätzlich ist die (zweite) Nahtverbindung 14E zum Verschließen des Mantels 14 an einer Kante, insbesondere äußeren Seitenkante, des jeweiligen Dämmelements 2, insbesondere des Abdeckelements 9, angeordnet und/oder ragt von dieser ab, wie insbesondere in Fig. 3 dargestellt.

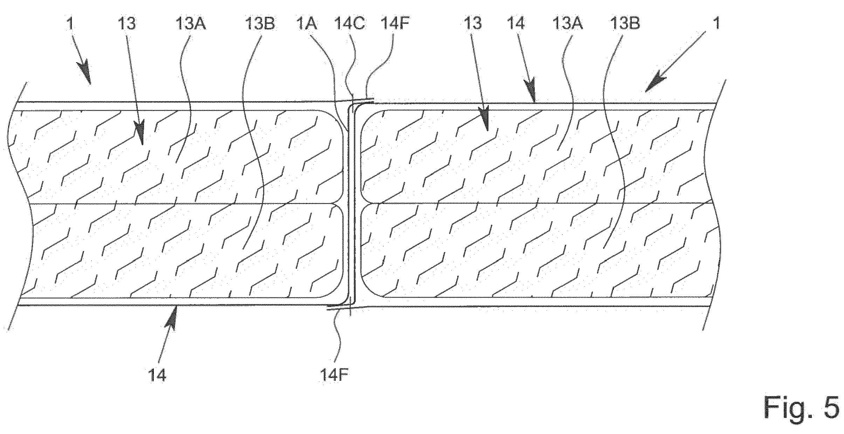

Vorzugsweise weist die Auskleidung 1 auf einer Stoß- bzw. Stirnseite 1A der Auskleidung 1 eine (dritte) Nahtverbindung 14F auf, vorzugsweise wobei die (dritte) Nahtverbindung 14F an einer Stoßkante der Stoßseite 1A angeordnet ist. Besonders bevorzugt ist die (dritte) Nahtverbindung 14F entweder an der inneren Stoßkante oder der äußeren Stoßkante der Stoßseite 1A angeordnet, wie Fig. 5 veranschaulicht.

Vorzugsweise sind mehrere Auskleidungen 1 in dem Kabelkanal 10 angeordnet oder anordenbar, insbesondere wobei mehrere Auskleidungen 1 den Kabelkanal 10 zumindest im Wesentlichen ununterbrochen, insbesondere über die zumindest im Wesentlichen gesamte Länge des Kabelkanals 10, auskleiden.

Für Verzweigungen, Ecken, Abknickungen und/oder Krümmungen des Kabelkanals 10 sind vorzugsweise vorgefertigte bzw. konfektionierte Auskleidungselemente, wie T-Stücke, Y-Stücke, 45°-Stücke oder 90°-Stücke, vorgesehen.

Vorzugsweise liegen die Auskleidungen 1 des Kabelkanals 10 - insbesondere auf Stoß und/oder vollflächig - aneinander an.

Vorzugsweise ist die (dritte) Nahtverbindung 14F auf einer Stoß- bzw. Stirnseite 1A einer ersten Auskleidung 1 versetzt zu der (dritten) Nahtverbindung 14F auf einer Stoß- bzw. Stirnseite 1A einer zweiten zu der ersten Auskleidung 1 benachbarten bzw. anliegenden Auskleidung 1 angeordnet.

Besonders bevorzugt ist die (dritte) Nahtverbindung 14F auf einer Stoß- bzw. Stirnseite 1A der ersten Auskleidung 1 an einer inneren Stoßkante der ersten Auskleidung 1 und die (dritte) Nahtverbindung 14F auf einer Stoß- bzw. Stirnseite 1A der zweiten Auskleidung 1 an einer äußeren Stoßkante der zweiten Auskleidung 1 angeordnet, vorzugsweise derart, dass die Stoßseite 1A der ersten Auskleidung 1 an der Stoßseite 1A der zweiten Auskleidung 1 zumindest im Wesentlichen vollflächig anliegt.

Aspekte der Auskleidung 1 sind insbesondere,
dass der Mantel 14 als Gewebe, Gewirke oder Gestricke ausgebildet ist, und/oder
dass der Mantel 14 Mineralfasern, insbesondere Glasfasern, aufweist oder durch diese gebildet ist, und/oder
dass der Mantel 14 eine - vorzugsweise anorganische - Beschichtung, Kaschierung oder Ausrüstung aufweist, und/oder
dass eine Nahtverbindung 14F der Auskleidung 1, insbesondere eines Mantels 14 der Auskleidung 1, an einer Innen- und/oder Außenkante einer Stoß- bzw. Stirnseite 1A der Auskleidung 1 angeordnet ist, und/oder
dass die Auskleidung 1, insbesondere ein Mantel 14 und/oder ein Kern 13 der Auskleidung 1, wärmeisolierend, hochtemperaturbeständig, feuerfest und/oder feuerhemmend ausgebildet ist, und/oder
dass die Haupterstreckungsachsen der Dämmelemente 2 zumindest im Wesentlichen parallel zueinander angeordnet sind, und/oder
dass die Auskleidung 1 dazu ausgebildet ist, den Kabelkanal 10 innen auszukleiden und/oder einen Brandschutzkanal 12 im Kabelkanal 10 zu bilden, und/oder
dass die Auskleidung 1 flexibel, elastisch und/oder - insbesondere radial bzw. seitlich - zusammendrückbar ist, vorzugsweise derart, dass durch Zusammendrücken der Auskleidung 1 die Auskleidung 1 kraftschlüssig mit dem Kabelkanal 10 verbindbar ist, und/oder
dass die Auskleidung 1 schraubenlos und/oder klebemittelfrei in und/oder mit dem Kabelkanal 10 befestigbar ist, insbesondere kraftschlüssig, und/oder
dass die Auskleidung 1 bzw. die Dämmelemente 2 im eingebauten Zustand außen zumindest im Wesentlichen vollflächig am Kabelkanal 10 bzw. einer Kabelkanalwandung und/oder in einem Eckbereich des Kabelkanals 10 am Kabelkanal 10 bzw. einer Kabelkanalwandung anliegen, und/oder
dass die Seitenelemente 5, 6 relativ zum Bodenelement 4 verschwenkbar sind, insbesondere derart, dass diese als - vorzugsweise U-förmiges - Basisteil 3 der Auskleidung 1 in den Kabelkanal 10 einsetzbar oder einklemmbar sind, und/oder
dass das Bodenelement 4 über ein erstes - vorzugsweise flexibles - Verbindungselement 7 mit dem ersten Seitenelement 5 und/oder über ein zweites - vorzugsweise flexibles - Verbindungselement 8 mit dem zweiten Seitenelement 6 verbunden ist, und/oder
dass das erste und/oder zweite Verbindungselement 7, 8 kleiner bzw. schmaler als die Dicke bzw. Höhe des Bodenelements 4, des ersten Seitenelements 5 und/oder des zweiten Seitenelements 6 sind/ist, und/oder
dass die Haupterstreckungsebene des ersten Seitenelements 5 und/oder die Haupterstreckungsebene des zweiten Seitenelements 6 unter Spannung und/oder Verformen, insbesondere Zusammendrücken, des Bodenelements 4, des ersten Seitenelements 5 und/oder des zweiten Seitenelements 6 orthogonal zu der Haupterstreckungsebene des Bodenelements 4 anordenbar sind/ist, und/oder
dass das erste und/oder zweite Verbindungselement 7, 8 einstückig mit einem Mantel 14 des Bodenelements 4, des ersten Seitenelements 5 und/oder zweiten Seitenelements 6 und/oder als (jeweils) eine Nahtverbindung 14D des Mantels 14 ausgebildet sind/ist.

Einzelne Aspekte und Merkmale können unabhängig voneinander, aber auch in beliebiger Kombination miteinander realisiert werden.

### Bezugszeichenliste:

- 1: Auskleidung
- 1A: Stoßseite
- 2: Dämmelement
- 3: Basisteil
- 4: Bodenelement
- 5: erstes Seitenelement
- 6: zweites Seitenelement
- 7: erstes Verbindungselement
- 8: zweites Verbindungselement
- 9: Abdeckelement
- 10: Kabelkanal
- 10A: Bodenplatte
- 10B: erste Seitenplatte
- 10C: zweite Seitenplatte
- 10D: Abdeckplatte
- 11: Kabel
- 12: Brandschutzkanal
- 13: Kern
- 13A: erste Schicht
- 13B: zweite Schicht
- 14: Mantel
- 14A: erste Seite
- 14B: zweite Seite
- 14C: Naht
- 14D: erste Nahtverbindung
- 14E: zweite Nahtverbindung
- 14F: dritte Nahtverbindung

## Patentansprüche

1. Auskleidung (1) für einen Kabelkanal (10), wobei die Auskleidung (1) zur Wärmeisolierung, insbesondere für den Hitze- und/oder Brandschutz, eines Kabels (11), insbesondere Lichtwellenleiters, in dem Kabelkanal (10) ausgebildet ist,
**dadurch gekennzeichnet,**
**dass** die Auskleidung (1) mindestens zwei, vorzugsweise drei oder vier, längliche Dämmelemente (2) aufweist, die zumindest abschnittsweise seitlich miteinander verbunden sind.

2. Auskleidung nach Anspruch 1, **dadurch gekennzeichnet, dass** die Dämmelemente (2) jeweils mindestens einen Kern (13) mit Dämmmaterial, vorzugsweise Mineralfasern bzw. Mineralwolle, besonders bevorzugt Steinwolle und/oder Glaswolle, aufweisen.

3. Auskleidung nach Anspruch 2, **dadurch gekennzeichnet, dass** die Dämmelemente (2) jeweils einen den Kern (13) ummantelnden Mantel (14) oder einen gemeinsamen die Kerne (13) ummantelnden Mantel (14) aufweisen.

4. Auskleidung nach Anspruch 3, **dadurch gekennzeichnet, dass** eine erste Seite (14A) des Mantels (14) zwischen den Kernen (13) mit einer der ersten Seite (14A) gegenüberliegenden zweiten Seite (14B) des Mantels (14) form- und/oder stoffschlüssig, insbesondere durch Vernähen, verbunden ist.

5. Auskleidung nach einem der voranstehenden Ansprüche, **dadurch gekennzeichnet, dass** Nähte (14C) der Auskleidung (1) Mineralfasern, insbesondere Glasfasern, aufweisen oder durch diese gebildet sind.

6. Auskleidung nach einem der voranstehenden Ansprüche, **dadurch gekennzeichnet, dass** eine Nahtverbindung (14E) der Auskleidung (1), insbesondere eines Mantels (14) der Auskleidung (1), auf einer Innenseite bzw. einer dem Kabelkanal (10) bzw. der Kabelkanalwandung abgewandten Seite der Auskleidung (1) ausgebildet ist.

7. Auskleidung nach einem der voranstehenden Ansprüche, **dadurch gekennzeichnet, dass** die Auskleidung (1) im eingebauten Zustand einen zumindest im Wesentlichen rechteckigen Brandschutzkanal (12) für das Kabel (11) bildet oder aufweist.

8. Auskleidung nach einem der voranstehenden Ansprüche, **dadurch gekennzeichnet, dass** ein Dämmelement (2) ein Bodenelement (4), ein Dämmelement (2) ein erstes Seitenelement (5), ein Dämmelement (2) ein zweites Seitenelement (6) und/oder ein Dämmelement (2) ein Abdeckelement (9) der Auskleidung (1) ist oder bildet.

9. Auskleidung nach Anspruch 8, **dadurch gekennzeichnet, dass** das Bodenelement (4) und die zwei Seitenelemente (5, 6) ein - vorzugsweise U-förmiges - Basisteil (3) der Auskleidung (1) bilden und/oder das Bodenelement (4) mit den zwei Seitenelemente (5, 6) zumindest abschnittsweise seitlich verbunden ist.

10. Auskleidung nach Anspruch 8 oder 9, **dadurch gekennzeichnet, dass** das Abdeckelement (9) zum Verschließen des Basisteils (3) in das Basisteil (3) und/oder zwischen die Seitenelemente (5, 6) drückbar bzw. klemmbar ist.

11. Kabelkanal (10) für ein Kabel (11), insbesondere einen Lichtwellenleiter, mit mindestens einer Auskleidung (1) zur Wärmeisolierung, insbesondere für den Hitze- und/oder Brandschutz, des Kabels (11),
**dadurch gekennzeichnet,**
**dass** die Auskleidung (1) nach einem der voranstehenden Ansprüche ausgebildet ist.

12. Verwendung einer Auskleidung (1) nach einem der Ansprüche 1 bis 10 zum Auskleiden eines vorzugsweise rechteckigen Kabelkanals (10) bzw. zur Bildung eines Brandschutzkanals, besonders bevorzugt für Lichtwellenleiter.

13. Verwendung nach Anspruch 12, **dadurch gekennzeichnet, dass** mehrere Auskleidungen (1) in dem Kabelkanal (10) angeordnet sind und/oder dass der Kabelkanal (10) zumindest im Wesentlichen ununterbrochen, insbesondere über die zumindest im Wesentlichen gesamte Länge des Kabelkanals (10), mit der Auskleidung (1) oder mehreren Auskleidungen (1) ausgekleidet wird.

14. Verwendung nach Anspruch 13, **dadurch gekennzeichnet, dass** Nahtverbindungen (14F) aneinander angrenzender bzw. anliegender Stirn- bzw. Stoßseiten (1A) der Auskleidungen (1) versetzt zueinander angeordnet werden.

15. Verwendung nach einem der Ansprüche 12 bis 14, **dadurch gekennzeichnet, dass** der Kabelkanal (10) bzw. die Kabelkanalwandung durch hochtemperaturbeständige, insbesondere zementgebundene, Platten (10A - 10D) gebildet ist.
